# EUROPÄISCHE PATENTSCHRIFT

(11) **EP 1 155 919 B1**
(45) Veröffentlichungstag und Bekanntmachung des Hinweises auf die Patenterteilung: **14.06.2006**
(21) Anmeldenummer: 01109119.6
(22) Anmeldetag: 12.04.2001
(51) Int. Cl.: B60R 16/02, H02H 3/20

(54) **Elektrisches Versorgungsnetz, insbesondere Bordnetz für ein Kraftfahrzeug, und Verfahren zur Detektion eines Kurzschlusses im Versorgungsnetz**
Electric power supply network, especially for a vehicle, and short-circuit detection process in this network
Réseau de distribution d'énergie électrique, notamment pour un véhicule, et procédure de détection d'un court-circuit dans ce réseau

(30) Priorität: 18.05.2000 DE 10024637
(43) Veröffentlichungstag der Anmeldung: 21.11.2001
(73) Patentinhaber: LEONI Bordnetz-Systeme GmbH & Co KG, 90402 Nürnberg (DE)
(72) Erfinder: Neubert, Joachim, 97422 Schweinfurt (DE)
(74) Vertreter: Tergau & Pohl Patentanwälte

(56) Entgegenhaltungen:
- DE-A- 19 527 997
- DE-A- 19 755 050
- DE-A- 19 944 833
- DE-C- 19 636 838
- US-A- 4 020 395

## Beschreibung

Die Erfindung betrifft ein elektrisches Versorgungsnetz, insbesondere ein Bordnetz für Kraftfahrzeuge, mit einem ersten, für eine höhere Spannung ausgelegten Leitungssystem und einem zweiten, für eine niedrigere Spannung ausgelegten Leitungssystem, wobei jedes Leitungssystem für die jeweilige Spannung ausgelegte Verbraucher sowie jeweils ein Schutzelement umfasst und einen gemeinsamen Spannungsbezugspunkt aufweist. Die Erfindung betrifft weiterhin ein Verfahren zur Detektion eines Kurzschlusses in einem solchen als Mehrspannungsbordnetz ausgebildeten Versorgungsnetz.

Das Bordnetz eines Kraftfahrzeugs ist bisher aus einem einzigen 14V-Hauptversorgungssystem aufgebaut. Für zukünftige Fahrzeuge sind 42V-Systeme geplant. Insbesondere während einer Übergangszeit für die Umstellung von 12V-auf 42V-Systeme sind Mehrspannungsbordnetze zu erwarten. Aus der gattungsbildende DE 197 55 050 A1 ist ein Mehrspannungsbordnetz zu entnehmen, bei dem gleichartige Verbraucher mit unterschiedlichen Spannungen versorgt werden.

Sind beide Systeme parallel vorhanden, so treten Sicherungsprobleme auf. Jedes System hat zwar sein eigenes Schutzelement, etwa eine entsprechend ausgelegte Schmelzsicherung, die im Falle von Überströmen die Verbindung zwischen der Spannungsquelle und den Verbrauchern unterbricht. Es besteht allerdings das Problem, dass bei einem Kurzschluss zwischen den Leitungssystemen ein Kurzschlussstrom vom ersten, mit höherer Spannung beaufschlagten Leitungssystem in das zweite Leitungssystem und von dort über einen Verbraucher über den gemeinsamen Spannungsbezugspunkt Masse abfließen würde. Wenn sich die Kurzschlussstelle von der Spannungsquelle aus gesehen nach dem zweiten Schutzelement befindet, bleibt die Beaufschlagung des zweiten Leitungssystems mit der höheren Spannung aufrechterhalten, selbst wenn das zweite Schutzelement auslösen würde. Die Verbraucher des zweiten Leitungssystems wären dann einer Spannung ausgesetzt, für die sie nicht ausgelegt sind. Eine Schädigung der Verbraucher und auch sonstiger elektrischer und elektronischer Bauelemente wäre die Folge.

Aufgabe der Erfindung ist es, in einem elektrischen Versorgungssystem der genannten Art die Detektion eines Kurzschlusses zwischen Leitungssystemen mit unterschiedlichen Versorgungsspannungen zu ermöglichen.

Diese Aufgabe wird jeweils gelöst durch die Merkmale der unabhängigen Patentansprüche 1 und 5. Danach ist vorgesehen, dass die Spannung am Ein- und Ausgang des zweiten Schutzelements von einem Spannungskomparator abgegriffen wird.

Im Normalfall ist die Spannung am Eingang des zweiten Schutzelements etwas höher oder gleich der Spannung an dessem Ausgang. Wenn nun das zweite Leitungssystem an einer von dessen Spannungsquelle aus gesehen nach dem Schutzelemente angeordneten Stelle mit dem ersten Leitungssystem über einen Kurzschluss verbunden wird, ändern sich die Spannungsverhältnisse am zweiten Schutzelement. Die Spannung am Ausgang ist nun höher als die am Eingang anliegende Spannung. Die plötzliche Änderung der Spannungsverhältnisse am zweiten Schutzelement wird mit Hilfe des Spannungskomparators abgegriffen. Auf die geschilderte Weise kann somit ein Kurzschluss zwischen den beiden Leitungssystemen auch bei geringen Kurzschlussströmen und damit bei geringen Spannungsänderungen sofort erkannt und Maßnahmen getroffen werden, die die Verbraucher und Bauelemente des zweiten Leitungssystems schützen.

Für eine besonders sichere Detektion des Kurzschlusses erfolgt dabei bevorzugt am Ausgang des Spannungskomparators ein digitales Umschalten, also eine Spannungsumkehrung. Diese ist dadurch bedingt, dass sich bei einem Kurzschluss die Spannungsverhältnisse an den Eingängen des Spannungskomparators vertauschen. D.h. der im Normalfall mit einem niedrigeren Spannungswert belegte Eingang wird bei Aufreten eines Kurzschlusses mit einem höheren Spannungswert beaufschlagt als der zweite Eingang des Spannungskomparators. Dadurch bedingt erfolgt das digitale Umschalten und ermöglicht so die sichere Detektion des Kurzschlusses, sobald der Kurzschlussstrom den Verbraucherstrom übersteigt, für den das zweite Leitungssystem ausgelegt ist.

Um die Verbraucher sicher zu schützen, ist zweckdienlicherweise vorgesehen, dass die Auslösung des ersten Schutzelementes und damit eine Abschaltung des ersten Leitungssystem herbeigeführt wird. Es wird also die Verbindung des für die höhere Spannung ausgelegten Leitungssystems zu dessen Spannungsquelle, etwa einer 42V-Batterie unterbrochen. Der Spannungskomparator detektiert aufgrund dieser Spannungsumkehr am Schutzelement mit der niedrigeren Versorgungsspannung eine Änderung der Richtung des durch das Schutzelement fließenden Stromes. Dies hat den entscheidenden Vorteil, dass hier einfache Schatltelemente zur Detektierung einsetzbar sind. Weiterhin wird keine besondere Referenzspannung als Vergleichsspannung benötigt. Die hier vorgestellte Schaltung zeichnet sich daher durch ihren besonders einfachen Aufbau aus, welche eine zuverlässige Detektion eines Kurzschlusses ermöglicht.

Falls es sich bei dem ersten Schutzelement um eine Schmelzsicherung handelt, ist es vorteilhaft, dass über ein vom Spannungskomparator getriggertes Schaltelement, vorzugsweise ein Thyristor, ein Kurzschluss zwischen dem ersten Leitungssystem und dem Massebezugspunkt hergestellt wird, der das Auslösen der Schmelzsicherung bewirkt. Das Schutzelement des Leitungssystems mit der höheren Spannung ist alternativ zur Schmelzsicherung bevozugt ein Schalter, etwa ein Halbleiterschalter oder ähnliches, der über eine Auswerteelektronik angesteuert wird und im Kurzschlussfall abschaltbar ist.

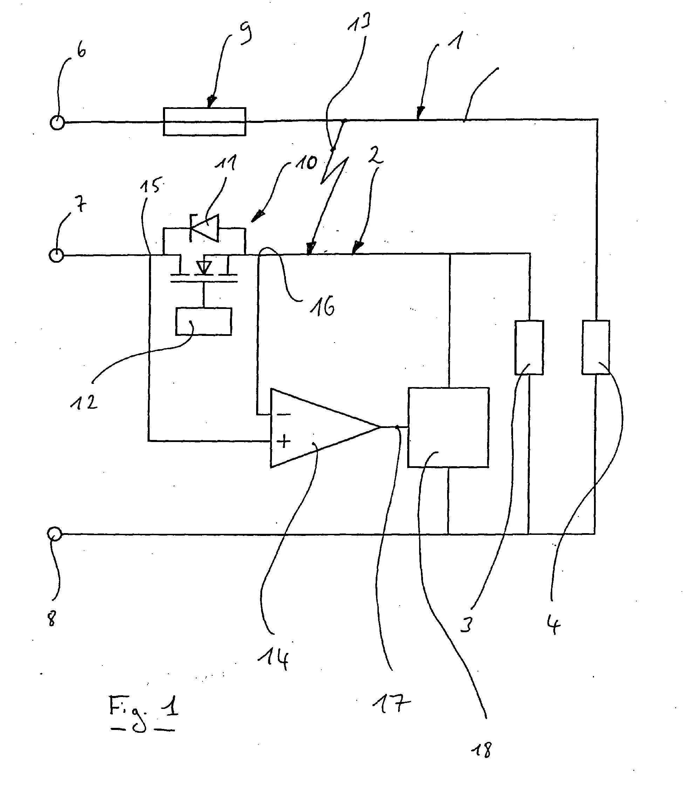

Die Erfindung wird anhand eines in der beigefügten Zeichnung dargestellten Ausführungsbeispiels näher erläutert.

Die Abbildung zeigt einen vereinfachten Schaltplan für ein Bordnetz eines Kraftfahrzeugs, das sich aus einem ersten und einem zweiten Leitungssystem 1,2 zusammensetzt. Jedes Leitungssystem 1,2 umfasst wenigstens einen elektrischen Verbraucher 3,4. Die Leitungssysteme 1,2 sind zur Bildung eines Stromkreises einerseits an den Pluspol 6,7 jeweils einer separaten Batterie (nicht dargestellt) und andererseits an einen Massepunkt 8 des Fahrzeuges angeschlossen, der wiederum mit dem Minuspol der Batterien verbunden ist. Das Leitungssystem 1 wird von einer 42V-Batterie und das Leitungssystem 2 von einer 12V-Batterie gespeist.

Beide Leitungssysteme 1,2 sind jeweils durch ein vorzugsweise im Bereich der Batterien angeordnetes Schutzelement 9,10 gegen unzulässig hohe Überströme abgesichert. Bei den Schutzelementen kann es sich ganz allgemein um Schmelzsicherungen oder um Schalter handeln, die im Kurzschlussfalle die Verbindung zwischen Batterie und Verbraucher trennen. Bei dem in der Abbildung gezeigten Ausführungsbeispiel ist das Schutzelement 9 eine Schmelzsicherung und das Schutzelement 10 ein Schalttransistor mit Inversdiode 11. Die Kontrolle des Schalttransistors 10 kann über eine elektronische Baueinheit 12 bewerkstelligt sein. Die Schutzelemente 9,10 sichern die Leitungssysteme 1,2 gegen einen Kurzschluss gegenüber dem Massepunkt 8 ab.

Ein Kurzschluss 13 zwischen den Leitungssystemen 1,2 an einer den Schmelzelementen 9,10 nachgeordneten, also zwischen ihnen und den Verbrauchern 3,4 liegenden Stelle bewirkt allenfalls, dass das Schutzelement 10 die Leitungsverbindung zur 12V-Batterie bzw. zu deren Pluspol 7 unterbricht. Trotzdem würde das Leitungssystem 2 weiterhin mit einer 42V-Spannung beaufschlagt werden.

Um dies zu verhindern, wird die Spannung am Ein- und Ausgang des Schutzelementes 10 mit Hilfe eines Spannungskomparators 14 abgegriffen. Bei störungsfreiem Betrieb ist die Spannung am Eingang 15 größer oder gleich der Spannung am Ausgang 16. Im Kurzschlussfalle liegt aber am Ausgang 16 eine Spannung von 42V an. Diese radikale Änderung der Spannungsverhältnisse bzw. der Spannungsumkehr am Schutzelement 10 wird vom Spannungskomparator 14 in ein Ausgangssignal umgewandelt, das über eine Signalleitung 17 abgreifbar und beispielsweise an eine Auswerteelektronik 18 übermittelbar ist. Die Elektronik 18 kann nun verschiedene Reaktionen auf den Kurzschluss in Gang setzen, beispielsweise das als Schalter ausgebildete Schutzelement 9 öffnen. Weiterhin kann die Elektronik 18 eine Verbindung zum fahrzeuginternen Informationssystem herstellen und beispielsweise eine Warnanzeige am Cockpit aktivieren. Für den Fall, dass das Schutzelement 9 im 42V-Leitungssystem 1 eine Schmelzsicherung ist, kann ein vom Ausgangssignal des Spannungskomparators 14 getriggerter Thyristor (nicht dargestellt) vorhanden sein, der einen Kurzschluss zwischen dem zweiten Leitungssystem 2 und dem Massepunkt 8 herstellt, wodurch die Schmelzsicherung 9 auslöst. Mit Hilfe des Spannungskomparators 14 oder eines vergleichbaren Bauteiles kann somit ein Kurzschluss zwischen den Leitungssystemen 1,2 sofort erkannt und entsprechende Maßnahmen, beispielsweise die oben geschilderten, angeleitet werden. Eine Schädigung eines im Leitungssystem 2 eingebundenen Verbrauchers 3 oder eines sonstigen Bauteils ist damit wirksam verhindert.

### Bezugszeichenliste

- 1: erstes Leitungssystem
- 2: zweites Leitungssystem
- 3: Verbraucher
- 4: Verbraucher
- 6: Pluspol
- 7: Pluspol
- 8: Massepunkt
- 9: Schutzelement
- 10: Schutzelement
- 11: Inversdiode
- 12: elektronische Baueinheit
- 13: Kurzschluss
- 14: Spannungskomparator
- 15: Eingang
- 16: Ausgang
- 17: Signalleitung
- 18: Auswerteelektronik

## Patentansprüche

1. Elektrisches Versorgungsnetz, insbesondere Bordnetz für ein Kraftfahrzeug, mit einem für eine höhere Spannung ausgelegten ersten Leitungssystem (1) und einem für eine niedrigere Spannung ausgelegten zweiten Leitungssystem (2), wobei die Leitungssysteme jeweils ein erstes bzw. zweites Schutzelement (9,10) sowie jeweils einen elektrischen Verbraucher (3,4) umfassen und einen gemeinsamen Spannungsbezugspunkt aufweisen,
**dadurch gekennzeichnet**
**dass** zur Detektion eines Kurzschlusses zwischen den Leitungssystemen (1,2) ein die Spannung am Ein- und Ausgang (15,16) des zweiten Schutzelements (10) abgreifender Spannungskomparator (14) vorgesehen ist.

2. Versorgungsnetz nach Anspruch 1,
**gekennzeichnet durch**
eine Auswerteelektronik (18), die das Ausgangssignal des Spannungskomparators (14) verarbeitet.

3. Versorgungsnetz nach Anspruch 1,
**gekennzeichnet durch**
ein vom Ausgangssignal des Spannungskomparators (14) getriggertes Schaltelement, mit dem das erste Leitungssystem (1) gegen Masse kurzschließbar ist.

4. Versorgungsnetz nach Anspruch 3,
**gekennzeichnet durch**
einen Thyristor als Schaltelement.

5. Verfahren zur Detektion eines Kurzschlusses in einem elektrischen Versorgungsnetz, insbesondere in einem Bordnetz für ein Kraftfahrzeug, mit einem für eine höhere Spannung ausgelegten ersten Leitungssystem (1) und einem für eine niedrigere Spannung ausgelegten zweiten Leitungssystem (2), wobei die Leitungssysteme jeweils ein erstes bzw. zweites Schutzelement (9,10) sowie jeweils einen elektrischen Verbraucher (3,4) umfassen und einen gemeinsamen Spannungsbezugspunkt aufweisen,
**dadurch gekennzeichnet**
**dass** ein Kurzschluss zwischen den Leitungssystemen (1,2) detektiert wird, indem ein Spannungskomparator (14) die Spannung am Ein- und Ausgang (15,16) des zweiten Schutzelements (10) abgreift.

6. Verfahren nach Anspruch 5,
**dadurch gekennzeichnet**
**dass** bei einem Kurzschluss eine Spannungsumkehrung am Ausgang des Spannungskomparators (14) auftritt.

7. Verfahren nach Anspruch 5 oder 6,
**dadurch gekennzeichnet**
**dass** bei einem Kurzschluss eine Auslösung des ersten Schutzelements (9) und damit eine Abschaltung des ersten Leitungssystems (1) herbeigeführt wird.

## Claims

1. Electrical power supply system, in particular an on-board electrical system for a motor vehicle, having a first line system (1) which is designed for a relatively high voltage, and a second line system (2) which is designed for a lower voltage, the line systems respectively comprising a first and second protective element (9, 10) and an electrical load (3, 4), and having a common voltage reference point, **characterized in that** a voltage comparator (14) which taps off the voltage at the input and output (15, 16) of the second protective element (10) is provided in order to detect a short circuit between the line systems (1, 2).

2. Power supply system according to Claim 1, **characterized by** evaluation electronics (18) which process the output signal from the voltage comparator (14).

3. Power supply system according to Claim 1, **characterized by** a switching element which is triggered by the output signal from the voltage comparator (14) and with which the first line system (1) can be shortcircuited to earth.

4. Power supply system according to Claim 3, **characterized by** a thyristor as the switching element.

5. Method for detecting a short circuit in an electrical power supply system, in particular in an on-board electrical system for a motor vehicle, having a first line system (1) which is designed for a relatively high voltage, and a second line system (2) which is designed for a lower voltage, the line systems respectively comprising a first and second protective element (9, 10) and an electrical load (3, 4), and having a common voltage reference point, **characterized in that** a short circuit between the line systems (1, 2) is detected by a voltage comparator (14) tapping off the voltage at the input and output (15, 16) of the second protective element (10).

6. Method according to Claim 5, **characterized in that** the voltage is reversed at the output of the voltage comparator (14) when there is a short circuit.

7. Method according to Claim 5 or 6, **characterized in that** the first protective element (9) is initiated and the first line system (1) is consequently switched off when there is a short circuit.

## Revendications

1. Réseau d'alimentation électrique, en particulier un réseau embarqué pour un véhicule, équipé d'un premier système de câbles (1) prévu pour une tension très élevée et un second système de câbles (2) prévu pour une tension très faible, dans lequel les systèmes de câbles comprennent respectivement un premier ou un second élément de protection (9, 10) ainsi que respectivement un dissipateur électrique (3, 4) et présentent un point de référence de tension commun,
**caractérisé en ce que**, en vue de la détection d'un court-circuit entre les systèmes de câbles (1, 2) est prévu un comparateur de tension (14) prélevant la tension à l'entrée et à la sortie (15, 16) du second élément de protection (10).

2. Réseau d'alimentation selon la revendication 1, **caractérisé par** une électronique d'évaluation (18), qui traite le signal de sortie du comparateur de tension (14).

3. Réseau d'alimentation selon la revendication 1, **caractérisé par** un élément de commutation déclenché par le signal de sortie du comparateur de tension (14), avec lequel le premier système de câbles (1) peut être mis en court-circuit contre la masse.

4. Réseau d'alimentation selon la revendication 3, **caractérisé par** un thyristor en tant qu'élément de commutation.

5. Procédure de détection d'un court-circuit dans un réseau d'alimentation électrique, en particulier dans un réseau embarqué pour un véhicule, équipé d'un premier système de câbles (1) prévu pour une tension très élevée et d'un second système de câbles (2) prévu pour une tension très faible, dans lequel les systèmes de câbles comprennent respectivement un premier ou un second élément de protection (9, 10) ainsi que respectivement un dissipateur électrique (3, 4) et présentent un point de référence de tension commun,
**caractérisé en ce qu'**un court-circuit entre les systèmes de câbles (1, 2) est détecté, où un comparateur de tension (14) prélève la tension à l'entrée et à la sortie (15, 16) du second élément de protection (10).

6. Procédure selon la revendication 5, **caractérisé en ce que**, lors d'un court-circuit, une inversion de tension apparaît à la sortie du comparateur de tension (14).

7. Procédure selon la revendication 5 ou 6, **caractérisé en ce que**, lors d'un court-circuit, un déclenchement du premier élément de protection (9) et ainsi une coupure du premier système de câbles (1) est provoqué.
